# EUROPÄISCHE PATENTSCHRIFT

(11) **EP 2 140 395 B1**
(45) Veröffentlichungstag und Bekanntmachung des Hinweises auf die Patenterteilung: **28.03.2012**
(21) Anmeldenummer: 08758340.7
(22) Anmeldetag: 14.04.2008
(51) Int. Cl.: G06K 7/00

(54) **SIM-KARTENLESER MIT FIXIERBARER SCHUBLADE**
SIM CARD READER COMPRISING A FIXABLE TRAY
LECTEUR DE CARTE SIM À TIROIR BLOCABLE

(30) Priorität: 20.04.2007 DE 102007018789
(43) Veröffentlichungstag der Anmeldung: 06.01.2010
(73) Patentinhaber: Amphenol-Tuchel Electronics GmbH, 74080 Heilbronn (DE)
(72) Erfinder: SCHNELL, Thomas, 74080 Heilbronn (DE); POGUNTKE, Mathias, 74080 Heilbronn (DE); DÖRR, Martin, 74211 Leingarten (DE)
(74) Vertreter: Wagner, Karl H.
(86) Internationale Anmeldenummer: PCT/EP2008/002949
(87) Internationale Veröffentlichungsnummer: WO 2008/128671

(56) Entgegenhaltungen:
- US-A1- 2006 040 560
- US-A1- 2006 270 455

## Beschreibung

Die Erfindung bezieht sich auf einen SIM-Kartenleser, und zwar insbesondere einen SIM-Kartenleser in den mittels einer Schublade eine SIM-Karte einsetzbar ist.

SIM-Kartenleser unterschiedlicher Bauart sind bereits bekannt und werden häufig in der Mobilfunktechnik verwendet. Bei SIM-Kartenlesern, die eine in einem Gehäuse hin- und herbewegbar gelagerte Schublade, die zur Aufnahme einer SIM-Karte geeignet ist, verwenden, ist es erwünscht einen Verriegelungsmechanismus vorzusehen, der die Schublade in einer Einschubendposition und somit auch die in der Schublade gehaltene SIM-Karte in einer Leseposition fixiert, in welcher die im Gehäuse vorgesehenen Kontaktelemente die entsprechenden Kontaktzonen der SIM-Karte kontaktieren können (Sieche z.B. Dokument 2006/0040560).

Bei einer Verwendung eines SIM-Kartenlesers in einem Telefongehäuse ist es insbesondere erwünscht, dass die Schublade mit dem Telefongehäuse abschließt, d.h. nicht vorsteht.

Die Erfindung hat sich die Aufgabe gestellt einen SIM-Kartenleser mit Schublade derart auszubilden, dass die Schublade selbständig in den Leser eingezogen wird, so dass sichergestellt wird, dass bei Lesestellung befindlicher SIM-Karte ein bündiger Abschluss mit dem Telefongehäuse erfolgt und sich die Karte in einer sicheren Leseposition befindet. Weiterhin soll der SIM-Kartenleser so ausgebildet sein, dass die benötigte Einzugskraft zum Schließen der Schublade geringer ist als die Rückhaltekraft, d.h. die Auszugskraft zum Herausziehen der Schublade. Ferner soll erreicht werden, dass die Schublade des SIM-Kartenlesers auf den letzen wenigen 1/10 mm sozusagen selbständig in den SIM-Kartenleser eingezogen wird. D.h. es wird für die Einschubrichtung eine geringere Kraft benötigt, als für die Auszugsrichtung.

Zur Lösung dieser Aufgabe sieht die Erfindung bei einem SIM-Kartenleser mit einer, in einem Gehäuse des SIM-Kartenlesers hin- und herbewegbaren Schublade zur Aufnahme der SIM-Karte vor, dass Einzugsmittel für die Schublade vorgesehen sind, und zwar vorzugsweise in der Form eines Hebelsystems und insbesondere eines Verschlusshebels derart, dass die für den Bereich des Einschubs "kurz vor der Lesestellung" erforderliche Kraft jedenfalls weitgehend von, vorzugsweise im Gehäuse des SIM-Kartenlesers angeordneten Federmitteln, aufgebracht wird.

Obwohl die vorliegende Erfindung, vorzugsweise bei einem SIM-Kartenleser mit Schublade verwendet wird, sei bemerkt, dass die Erfindung auch allgemein bei Chipkartenlesern verwendet werden kann, insbesondere auch bei einem Leser, der anstelle einer Schublade andere Karteneinführungsmittel verwendet.

Der erfindungsgemäße SIM-Kartenleser weist, wie bereits erwähnt, vorzugsweise eine Schublade auf, die zum einen eine Translationsbewegung in Einschubrichtung bis zur Lesestellung der SIM-Karte vorsieht und zum anderen eine Bewegung in Auszugsrichtung um die SIM-Karte aus der Lesestellung und aus dem SIM-Kartenleser heraus zu transportieren. Erfindungsgemäß ist ein Verschlusshebel vorgesehen, der vorzugsweise am Gehäuse des SIM-Kartenlesers gelagert ist und mit einer, an einer Seitenkante der Schublade vorgesehenen Nocken- und Führungsfläche zusammenwirkt, um den gewünschten Bewegungsablauf zu erzielen. Vorzugsweise sind derartige Verschlusshebel zu beiden Seiten der Schublade angeordnet, so dass sich eine ausgeglichene und schnelle Bewegung für die Schublade bei Annährung an die Lesestellung an die SIM-Karte ergibt.

Erfindungsgemäß ist eine in der Seitenfläche (vorzugsweise in beiden Seitenkanten) der Schublade gebildete Führungs- und Nockenfläche derart gestaltet, dass die während der Bewegung der Schublade in Einschubrichtung die in den Federmitteln gespeicherte Kraft im letzten Bereich vor Erreichen der Lesestellung (z.B. wenigen 1/10 mm zuvor) selbständig und plötzlich zur Wirkung kommt, um die Schublade in die Einschubendposition und damit die SIM-Karte in die Lesestellung zu bringen.

Durch das erfindungsgemäße Hebelsystem im Zusammenwirken mit der Führungs- oder Nockenfläche wird erreicht, dass die in der Endphase des Schließens der Schublade bei Annäherung an die Lesestellung für den Benutzer erforderliche Kraft geringer ist, als die Kraft die er ausüben muss, um die Schublade zu entnehmen, d.h. in Auszugsrichtung zu bewegen.

Weitere Vorteile, Ziele und Einzelheiten der Erfindung ergeben sich aus den Ansprüchen sowie aus der Beschreibung eines Ausführungsbeispiels anhand der Zeichnung. In der Zeichnung zeigt:
- Fig. 1: eine perspektivische Draufsicht auf ein Gehäuse eines erfindungsgemäßen SIM-Kartenlesers, und zwar bei nichteingesetzter Schublade;
- Fig. 2: eine perspektivische Draufsicht auf den SIM-Kartenleser, wobei hier die Schublade teilweise in Einschubrichtung in das Gehäuse eingeschoben ist;
- Fig. 3: eine perspektivische Ansicht auf den SIM-Kartenleser, gemäß Fig. 2 von unten;
- Fig.4: den SIM-Kartenleser, gemäß Fig. 2 in seiner vollständig eingesetzten Stellung, d.h. in der Lesestellung für die SIM-Karte;
- Fig. 5: eine Einzelheit des SIM-Kartenlesers der Fig. 4, wobei verschiedene Teile weggebrochen sind, um die Einzugsmittel für die SIM-Karte zu zeigen, wobei die Einzugsmittel eine praktisch selbsttätige Einzugsbewegung der Schublade in das Gehäuse bewirken;
- Fig. 6-8: schematisch verschiedene Darstellungen, um die Arbeitsweise der erfindungsgemäßen Einzugsmittel insbesondere eines Verschlusshebels der Einzugsmittel zu erläutern.

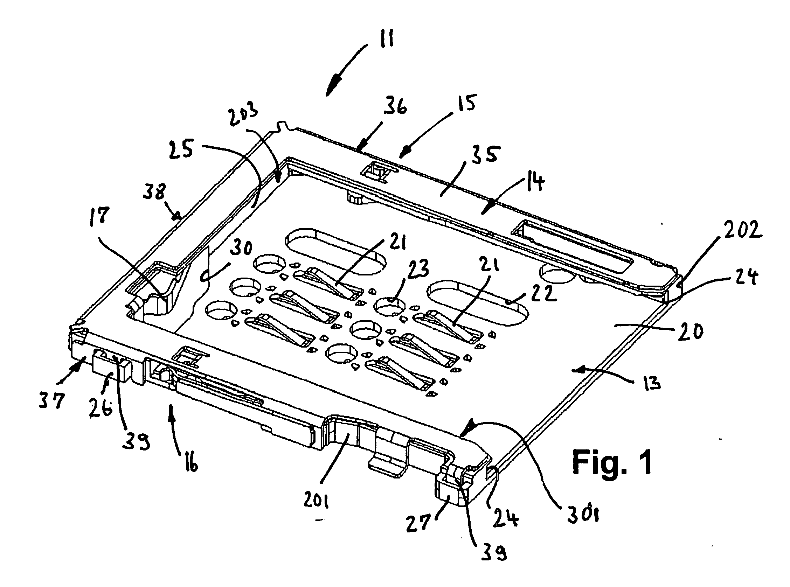

In den Figuren 1-8 ist ein Ausführungsbeispiel eines erfindungsgemäßen SIM-Kartenlesers 10 beschrieben.

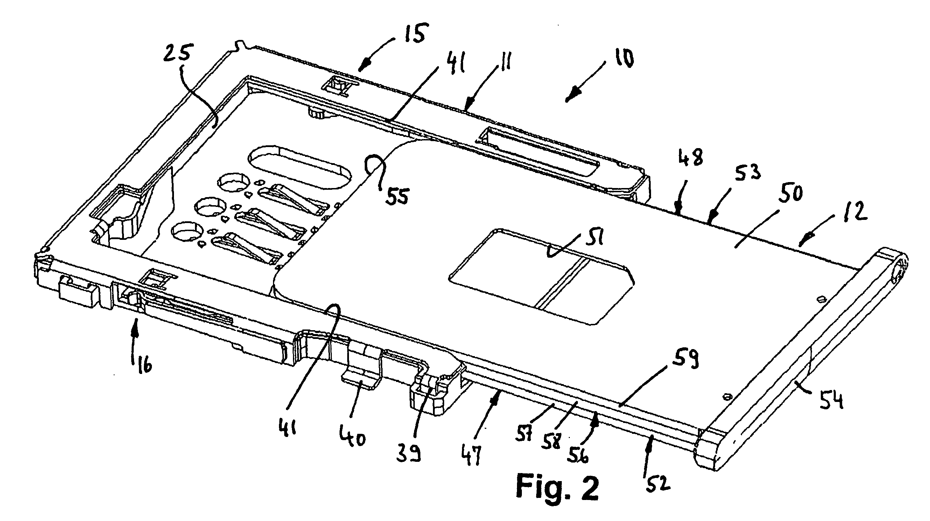

Der in Fig. 1-5 gezeigte SIM-Kartenleser 10 weist ein, insbesondere in Fig. 1 gezeigtes Gehäuse 11 auf, in welches, wie in Fig. 2 gezeigt, eine Schublade 12 einführbar ist. Das Gehäuse 11 weist einen Kontaktträger 13 und vorzugsweise einen den Kontaktträger 13 umschließenden Metallrahmen 14 auf. Einzugs- und Verriegelungsmittel (auch kurz: Einzugsmittel) 15, 16 sind vorzugsweise beidseitig, vorzugsweise in der Nähe der Lesestellung der nicht gezeigten SIM-Karte, einerseits im Gehäuse 11 und andererseits in der Schublade 12 vorgesehen. Aus Gründen der Vereinfachung werden im Folgenden nur die Einzugsmittel 15 beschrieben.

### Der Kontaktträger 13

Der Kontaktträger 13 ist vorzugsweise aus Kunststoff hergestellt und besitzt eine Bodenwand 20 in der Kontaktelemente 21 befestigt sind. Öffnungen 22, 23 sind in der Bodenwand 20 ausgebildet. Der Kontaktträger 13 bildet ferner zwei parallele Seitenwände 201, 202, die durch eine Rückwand 203 verbunden sind. In den beiden Seitenwänden 201, 202 sind nach innen weisende Einführschlitze 24 für die Schublade 12 ausgebildet. Die Rückwand 203 bildet eine Anschlagfläche 25 für die Einschubendposition der Schublade 12. Nicht näher bezeichnete Seitenwandflächen und die Anschlagfläche 25 des Kontaktträgers 13 definieren einen Schubladenaufnahmeraum 301. Wenn die Schublade 12 in ihrer Einschubendposition an der Anschlagfläche 25 der Rückwand 203 liegt, befindet sich die von der Schublade 12 transportierte SIM-Karte in ihrer Lesestellung, kontaktiert also die Kontaktelemente 21.

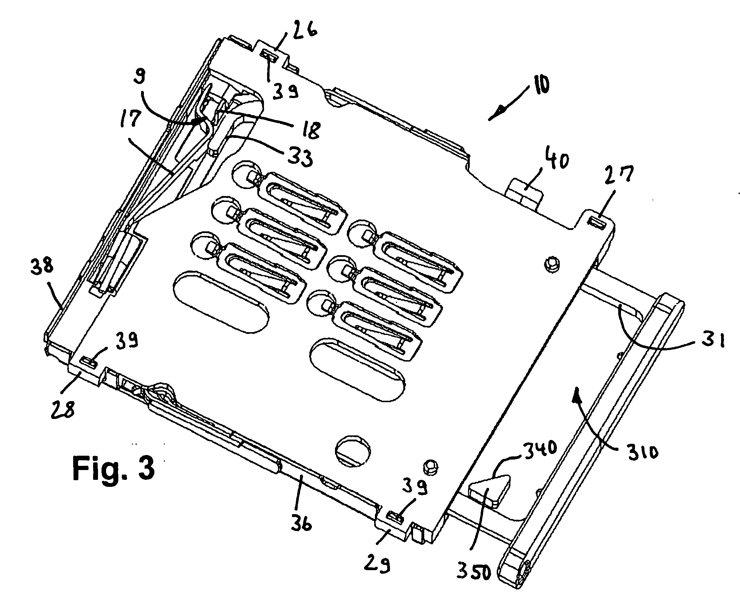

Benachbart zu seinen vier Ecken bildet der Kontaktträger 13 Verankerungsohren 26, 27, 28 und 29. Ferner ist ein Ausschnitt 30 in der Bodenwand 20 ausgebildet, und zwar im Bereich eines beweglichen Endlagenschalterkontakts 17 eines Endlagenschalters 9. Ein stationärer Endlagenschalterkontakt 18 ist ebenfalls im Kontaktträger 13 angeordnet. In Fig. 3 ist der Endlagenschalter 9 in seiner Öffnungsstellung gezeigt.

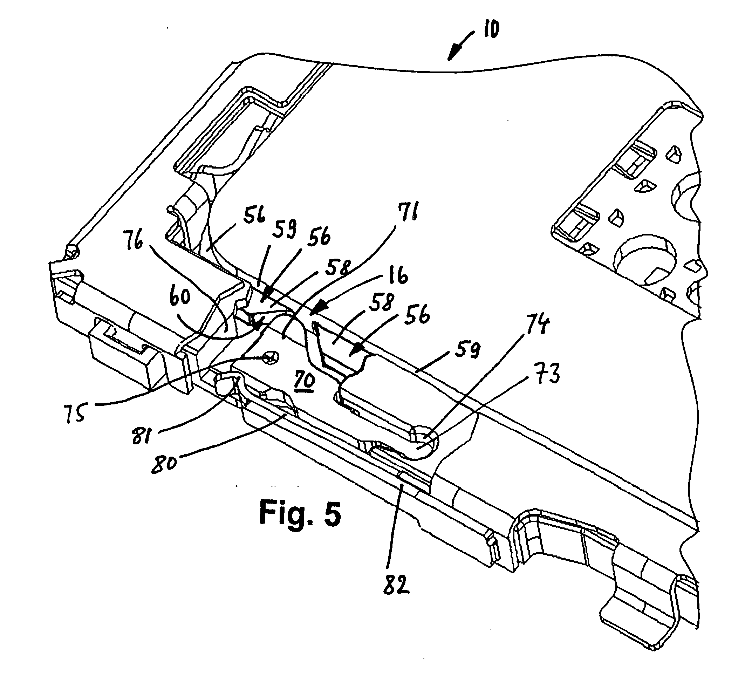

In jeder der Seitenwände 201 und 202 ist jeweils noch eine zu beschreibende Ausnehmung 76 - vgl. Fig. 5 - ausgebildet.

### Der Metallrahmen 14

Der Rahmen 14 besteht vorzugsweise aus Metallblech und weist einen hufeisenförmigen Oberteil 35 auf von dem aus eine erste Seitenwand 36 und parallel dazu eine zweite Seitenwand 37 sowie eine, die beiden Seitenwände 36, 37 verbindende Rückwand 38 nach unten ragen. Mittels Verankerungslappen 39 ist der Metallrahmen 14 am Kontaktträger 13 befestigt und zwar dadurch, dass die Verankerungslappen 39 in Öffnungen der Verankerungsohren 26 bis 29 eingesetzt sind. Ferner bildet der Metallrahmen 14 einen Befestigungsfuß 40 zur Verbindung mit Masse bzw. einem definierten Potential. Die Seitenwände 36, 37 des Metallrahmens 14 bilden ferner jeweils eine Seitenführungsfläche 41 zur Anlage an die Seitewände (24) des Kontaktträgers.

### Die Schublade 12

Die Schublade 12 besteht im Wesentlichen aus einer Aufnahmeplatte 50, in der eine (eine wesentlich kleiner Form als die SIM-Karte besitzende) Öffnung 51 andeutet, dass die Schublade 12 zur Aufnahme einer SIM-Karte dient. Die SIM-Karte ist etwa so groß wie die Aufnahmeplatte 50. Die nicht gezeigte SIM-Karte wird in den - vgl. Fig. 3 - durch Innenflächen 31, 32 und 33 so wie Anschlagfläche 340 gebildeten Aufnahmeraum 310 an der Unterseite der Schublade 12 eingesetzt. Ein dreieckiger Vorsprung 350 bildet die Anschlagfläche 340. Die Aufnahmeplatte 50 besitzt - vgl. Fig. 2 - beabstandete parallel verlaufende abgestufte Seitenflächen 47, 48. Entlang der Seitenflächen 47, 48 verlaufen Führungsmittel 52 bzw. 53. Die Seitenflächen 47 und 48, sowie die entsprechenden Führungsmittel 52 und 53 sind identisch aufgebaut, so dass diese nur einmal beschrieben werden. Die Schublade kann aus (abschirmendem) Metall oder Kunststoff bestehen.

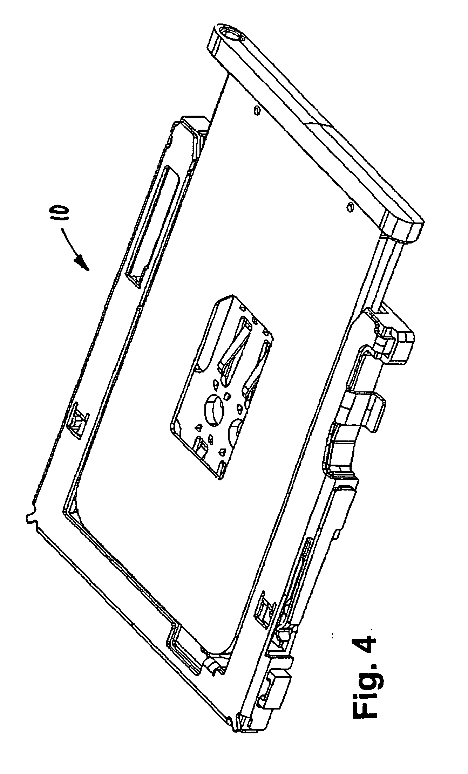

An der in Fig. 2 rechtsgelegenen Vorderfläche der Aufnahmeplatte 50 ist ein Schubteil 54 angebracht. Die entgegengesetzt zur Vorderfläche gelegene Rückfläche der Aufnahmeplatte 50 bildet eine Anlagefläche 55 (Fig. 2) zur Anlage an der Anschlagfläche 25, dann wenn sich die Schublade 12 in der der Lesestellung der SIM-Karte entsprechenden Einschubendposition (Fig. 4) befindet.

Die Führungsmittel 52 (entsprechend auch die Führungsmittel 53) weisen eine Führungsrippe 56 auf, die eine Seitenfläche 57 und eine obere Führungsfläche 58 bildet. Oberhalb der Führungsrippe 56 ist eine Seitenführungsfläche 59 gebildet. Die Führungsrippe 56 - vgl. Fig. 5 - erstreckt sich nicht in den Bereich der Rückfläche oder Rückwand der Schublade 12 hinein.

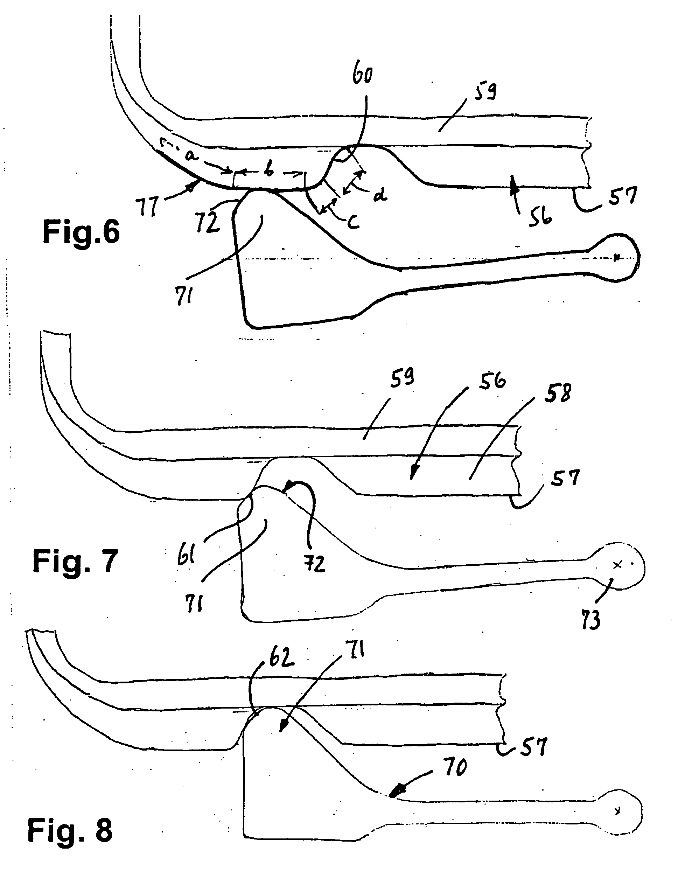

Die Einzugs- und Verriegelungsmittel 15, 16 weisen eine in der seitlichen Führungsrippe 56 ausgebildete Ausnehmung 60 auf. In diese ragt ein Führungsnocken 71 eines Verschlusshebels 70 hinein, wenn sich die Schublade 12 in ihrer Einschubendposition befindet. Die Rippe 56 und deren Ausnehmung 60 bilden - vgl. Fig. 6 - eine Steuerkurve 77.

Eine der Ausnehmung 60 entsprechende Ausnehmung 60 ist vorzugsweise auch auf den entgegen gesetzt liegenden Rippe 56 (nicht gezeigt), der entgegen gesetzt liegenden Seitenwand 202 ausgebildet.

Der Verschlusshebel 70 ist um einen Drehpunkt 73 schwenkbar in der im Kontaktträger 13 ausgebildeten Ausnehmung 76 gelagert. Zum Zwecke der Schwenklagerung bildet der Verschlusshebel 70, an seinem entgegengesetzt zum Nocken 71 liegenden Ende ein scheibenförmiges teilkreisförmiges Lagerelement 75, welches in einer entsprechenden Lagerausnehmung 74, ausgebildet in der Ausnehmung 76 der Seitenwand 201, 202 des Kontaktträgers 13, vorgesehen ist. Die Oberwand 35 des Metallrahmens 14 deckt den Verschlusshebel 70 und sein aus Lagerelement 75 und Lagerausnehmung 74 gebildetes Schwenklager weitgehend ab. Der Verschlusshebel 70 erstreckt sich in Längsrichtung in der Seitenwand 201 und zwar in der Ausnehmung 76. Entgegengesetzt zum Lagerelement 75 bildet der Hebel 70 den Führungsnocken 71 der eine Nockenfläche 72 aufweist, die im Berührungsbereich mit der Steuerkurve 77 in etwa kreisförmig ausgebildet ist. Der Verschlusshebel 70 wird durch Federmittel 80, 82 gegen die an der Seitenfläche 57 gebildete Steuerkurve 77 gedrückt. Die Federmittel 80, 82 weisen eine vom Metallrahmen 14 gebildete Blattfeder 80 auf, die mit einem abgewinkelten Teil 81 gegen den Verschlusshebel 70 drückt. Die Federmittel 80, 82 weisen ferner eine Verstärkungsfeder 82 auf, die außen über der Blattfeder 81 liegt und am Metallrahmen 14 benachbart zur Blattfeder 80 befestigt ist und die Federkraft der Feder 80 verstärkt.

In Figuren 6-8 ist vergrößert die Funktionsweise des Verriegelungsmechanismus bzw. der Schubladenverrastung dargestellt.

Fig. 6 zeigt, dass die Seitenfläche 57 der Führungsrippe 56 erfindungsgemäß mit der Steuerkurvenfläche, kurz einer Steuerkurve 77, versehen ist, die mehrere Steuerkurvenabschnitte a, b, c und d aufweist, die unterschiedlich gekrümmt sind. Über den Abschnitt a gleitet die Nockenfläche 72 des Verschlusshebels 70 beim Einschieben der Schublade 12 und spannt dabei die Federmittel 81, 82 vor. Im Steuerkurvenabschnitt b sind die Federmittel 80, 82 maximal gespannt. In dem, eine starke Krümmung in die Ausnehmung 60 hinein aufweisenden, Steuerkurvenabschnitt c, kommt dann, wie in Fig. 7 gezeigt, der Führungspunkt 61 der Nockenfläche 72 in eine Stellung, wo die Kraft der Federmittel 81, 82 verhältnismäßig plötzlich zum Einsatz kommt und den Nocken 71 entlang Abschnitt c und d in die Ausnehmung 60 drückt und dabei die Schublade 12 während der letzten kurzen Strecke selbständig in den Leser 10 einzieht. Bei dieser kurzen Strecke bis zum Erreichen der Anschlagfläche 25 durch die Schublade 12 handelt es sich beispielsweise um weniger als ein 1/10 mm. Bei dieser nach Innen in die Ausnehmung 60 hinein erfolgenden Bewegung gleitet die Nockenfläche 72 über den Führungspunkt 61 hinweg und entlang des Steuerkurvenabschnitts d, der verhältnismäßig steil ist, um die in Fig. 8 gezeigte Einschubendposition zu erreichen. In dieser Einschubendposition von Schublade 12 und Verschlusshebel 70 befindet sich die Schublade 12 in der Lesestellung für die SIM-Karte und gleichzeitig in einer Verriegelungsposition. Dadurch dass die Steuerflächen d und c verhältnismäßig steil sind, ist die Kraft, die auf die Schublade 12 vom Benutzer in Auszugsrichtung auszuüben ist, verhältnismäßig groß, jedenfalls größer als die vom Benutzer auszuübende Einzugskraft.

Die Wirkung lässt sich verstärken, indem an der korrespondierenden Nockenfläche (72) unterschiedliche Abschnitte mit unterschiedlicher Krümmung vorgesehen sind.

Gemäß einer weiteren Ausbildung der Erfindung werden die Einzugsmittel derart ausgelegt, dass sie nur, oder im Wesentlichen nur eine Verriegelung bzw. Halterung der Schublade in einer der Leseposition der SIM-Karte entsprechenden Position bewirken.

## Patentansprüche

1. SIM- bzw. Chipkartenleser (10) mit einem Gehäuse (11 ) in den eine Schublade (12) mit eingesetzter SIM-Karte in Einschubrichtung in eine Lesestellung der SIM-Karte einschiebbar ist, **dadurch gekennzeichnet dass** Einzugsmittel (16) vorgesehen sind, die nach Durchlaufen einer bestimmten Distanz in Einschubrichtung die Schublade (12) selbständig in den SIM-Kartenleser (10) einziehen und verriegeln oder festlegen.

2. SIM-Kartenleser (10) nach Anspruch 1 , wobei die Einzugsmittel (16) ein Hebelsystem aufweisen, welches mit der Schublade derart zusammenwirkt, dass die für den Einschub benötigte Kraft geringer ist als die Kraft zum Entnehmen der Schublade (12), und wobei im Gehäuse (11) mindestens ein Verschlusshebel (70) seitlich bezüglich der Bewegungsrichtung der Schublade (12) schwenkbar angeordnet ist, und mit der Schublade (12) derart zusammenwirkt, dass bei der anfänglichen Einschubbewegung der Schublade (12) in den Kontaktträger (13) Federmittel (80, 81) vorgespannt werden, die beim Erreichen einer Einschubposition nahe der Lesestellung der SIM-Karte durch den Verschlusshebel (70) auf die Schublade (12) derart einwirken, dass diese zügig mit großer Kraft in die Endposition verschoben wird.

3. SIM-Kartenleser (10) nach Anspruch 2, wobei der mindestens eine Verschlusshebel (70) eine Nockenfläche (72) aufweist, die durch die Federmittel (80, 82) gegen eine Führungsrippe (56) der Schublade (12) drückt, wobei die Führungsrippe (56) Steuerkurvenabschnitte a, b, c und d bildet, welche zusammen mit der Nockenfläche (72) zunächst ein Spannen der Federmittel bewirken, und sodann eine plötzliche Schubbewegung für die Schublade initiieren.

4. SIM-Kartenleser (10) nach Anspruch 1 oder 2, wobei die Einzugsmittel (16) einen im Kontaktträger (13) bzw. der Schublade (12) gelagerten Verschlusshebel (70) aufweisen, der mit einer Steuerkurve ausgebildet in entweder dem Kontaktträger oder der Schublade zusammenwirkt, wobei Federmittel (80, 81 ) den Verschlusshebel (70) gegen eine Steuerkurve (77) drücken, und wobei der Verschlusshebel (70) vorzugsweise in einer Ausnehmung (76) einer Seitenwand (37) schwenkbar gelagert ist.

5. SIM-Kartenleser (10) nach einem oder mehreren der vorhergehenden Ansprüche, wobei ein Metallrahmen (14) vorgesehen ist, der einen hufeisenförmigen Oberteil (35) bildet, der die Seitenwände 201 , 202 von oben her abdeckt und diese seitlich teilweise umfasst, wobei der Metallrahmen mit vorzugsweise der ersten und zweiten Seitenwand 36, 37 jeweils eine Blattfeder (80) bildet, die mit dem Verschlusshebel in Berührung steht.

6. SIM-Kartenleser (10) nach einem oder mehreren der vorhergehenden Ansprüche, wobei die Schublade (12) eine Aufnahmeplatte (50) aufweist, die entlang ihrer Seitenflächen (47, 48) Führungsmittel (52, 53), besitzt, wobei vorzugsweise die Rückfläche der Aufnahmeplatte (50) eine Anlagefläche (55) zur Anlage an eine vom Kontaktträger gebildete Anschlagfläche (25) besitzt.

7. SIM- bzw. Chipkartenleser nach Anspruch 1, wobei die Einzugs- und Verriegelungsmittel, die die Karteneinführungsmittel kurz vor Erreichen der Lesestellung selbständig in den Kontaktträger einziehen, und zwar bis sie die Lesestellung der Chipkarte und in dieser Stellung derart durch Vorsehen einer Rückhaltekraft verriegeln, dass zum Entnehmen der Karteneinführungsmittel, d.h. zur Überwindung der Rückhaltekraft beim Entnehmen der Karteneinführungsmittel, eine größere Auszugskraft als die beim Einziehen durch den Benutzer aufgewandte Einzugskraft erforderlich ist.

8. SIM-Kartenleser nach einem oder mehreren der vorhergehenden Ansprüche, wobei an der Nockenfläche (72) unterschiedliche Abschnitte mit unterschiedlicher Krümmung vorgesehen sind, und wobei vorzugsweise die Schublade (12) in ihrer Einschubendposition an eine Anschlagfläche (25) der Rückwand (203) liegt, und die von der Schublade (12) transportierte SIM-Karte sich in ihrer Lesestellung befindet.

9. SIM-Kartenleser nach einem oder mehreren der vorhergehenden Ansprüche, wobei in einem Ausschnitt (30) in der Bodenwand (20) ein beweglicher Endlagenschalterkontakt (17) eines Endlagenschalters (9) angeordnet ist, der mit einem ebenfalls im Kontaktträger (13) angeordneten Endlagenschalterkontakt (18) zusammenwirkt.

10. SIM-Kartenleser nach einem oder mehreren der vorhergehenden Ansprüche, wobei der Metallrahmen (14) durch Verankerungslappen (39) an Verankerungsohren (26-29) des Kontaktträgers (13) befestigt ist.

11. SIM-Kartenleser nach einem oder mehreren der vorhergehenden Ansprüche, wobei die Schublade (12) an ihrer Unterseite einen Aufnahmeraum (310) für die SIM-Karte bildet, wobei die Schublade vorzugsweise aus Metall hergestellt ist.

12. SIM-Kartenleser nach einem oder mehreren der vorhergehenden Ansprüche, wobei die Führungsmittel (52) eine Führungsrippe (56) aufweisen, die eine Seitenfläche (57) und eine obere Führungsfläche (58) bildet, wobei ferner oberhalb der Führungsrippe (56) eine Seitenführungsfläche (59) gebildet ist, und wobei die Führungsrippe (56) sich vorzugsweise nicht in den Bereich der Rückfläche oder Rückwand der Schublade (12) hineinerstreckt.

13. SIM-Kartenleser nach einem oder mehreren der vorhergehenden Ansprüche, wobei die Einzugsmittel (15, 16) eine in der Führungsrippe (56) ausgebildete Ausnehmung (60) aufweisen, in welche ein Führungsnocken (71) des Verschlusshebels (70) hineinragt, wenn sich die Schublade (12) in ihrer Einschubendposition befindet, wobei vorzugsweise die Rippe (56) die Steuerkurve (77) bildet.

14. SIM-Kartenleser nach einem oder mehreren der vorhergehenden Ansprüche, wobei der Verschlusshebel (70) um einen Drehpunkt (73) schwenkbar in deren Kontaktträger (13) ausgebildeten Ausnehmung (76) gelagert ist und zu diesem Zweck an seinem entgegengesetzt zum Nocken (71) liegenden Ende ein scheibenförmiges teilkreisförmiges Lagerelement (75) aufweist, welches in einer Lagerausnehmung (74) schwenkbar gelagert ist.

15. SIM-Kartenleser nach einem oder mehreren der vorhergehenden Ansprüche, wobei die Einzugsmittel derart ausgelegt sind, dass sie nur, oder im Wesentlichen nur eine Verriegelung bzw. Halterung der Schublade in einer der Leseposition der SIM-Karte entsprechenden Position bewirken.

## Claims

1. A SIM card or a chip card reader (10) having a housing (11) into which a drawer (12) with a SIM-card being inserted therein can be pushed in an insert direction into a reading position of the SIM-card
**characterized in that**
pull-in means (16) are provided which will, after a certain distance in the insert direction is passed, move the drawer (12) independently into the SIM-card-reader (10) and lock it.

2. The SIM-card reader (10) of claim 1, wherein the pull-in means (16) comprise a lever system which cooperates with the drawer such that the force required for the insert movement is the smaller than the force required for the removal of the drawer (12), and wherein
in said housing (11) at least one locking lever (70) is pivotally mounted laterally with respect to the direction of movement of the drawer (12), wherein said locking lever (12) cooperates with the drawer (12) such that during the initial insert movement of the drawer (12) into the contact support (13) spring means (80, 81) are biased, said spring means will, when the drawer reaches an insert position close to the SIM card reading position, act by means of the locking lever (70) onto the drawer (12) such that the drawer is swiftly moved with high force into the end reading position.

3. The SIM card reader (10) of claim 2, wherein said at least one locking lever (70) comprises a cam surface (72) which is biased by the spring means (80,82) against a guide rib (56) of the drawer (12), said guide rib (56) forming control curve sections a, b, c and d which, together with the cam surface (72), effect initially a tensioning of the spring means and subsequently initiate a sudden push movement for the drawer.

4. The SIM card reader of claim 1 or 2 wherein the pull-in means (16) comprise a locking lever (70) which is mounted in the contact support (13) or the drawer (12), said locking lever (70) adapted to cooperate with a control curve which is formed in the contact support or in the drawer, wherein
spring means (80,81) press the locking lever (70) against a control curve (77), and wherein the locking lever (70) is preferably pivotally mounted in a recess (76) of a side wall (37).

5. The SIM card reader (10) according to one or more of the preceding claims comprising a metal frame (14) forming a horseshoe shaped upper portion (35) which covers the side walls 201, 202 from above and which laterally and partially encloses said sidewalls laterally and partially and, wherein
the metal frame forms, preferably together with the first and second side walls (36,37), each one leaf spring (80) which is in contact with the locking lever.

6. The SIM card reader (10) according to one or more of the preceding claims, wherein the drawer (12) comprises a receiving plate (50) which is provided along its side surfaces (47,48) with guide means (52,53), and wherein preferably the back surface of the receiving plate (50) comprises an abutment surface (55) for abutment at an abutment surface (25) formed by the contact support.

7. The SIM card or chip card reader of claim 1 wherein the pull-in locking means which shortly prior to reaching the reading position, independently draw the drawer (card insert means) into the contact support and into the reading position of the chip card,
provide a retention force in said reading position, such that when removing the drawer (card insert means), for overcoming the retention force a larger pull-out (removing) force is required than the force applied by the user for the insertion.

8. The SIM card reader, according to one or more of the preceding claims wherein at the cam surface (72) different sections having different curvatures are provided, and wherein preferably the drawer (12), in its insert end position, abuts at an abutment surface (25) of the back wall (203), with the SIM card, transported by the drawer (12) being in its reading position.

9. The SIM card reader, according to one or more of the preceding claims, wherein in an cutout (30) of the bottom wall (20) a movable end position switch contact (17) of an end position switch (9) is provided, which cooperates with an end position switch contact (18) which is also located in the contact support (13).

10. The SIM card reader as set forth in one or more of the preceding claims, wherein the metal frame is mounted by anchoring tabs (39) at anchoring ears (26-29) of the contact support (13).

11. The SIM card reader, according to one or more of the preceding claims, wherein the drawer (12) forms at its bottom side a receiving space (310) for the SIM card and wherein the drawer is preferably made of metal.

12. The SIM card reader, according to one or more of the preceding claims, wherein the guide means (52) comprise a guide rib (56) which forms a side surface (57) and an upper guide surface (58), wherein further above the guide rib (56) a side guide surface (59) is formed, and wherein the guide rib (56) preferably does not extend into the area of the back surface or the back wall of the drawer (12).

13. The SIM card reader, as set forth in one or more of the preceding claims, wherein the pull-in means (15, 16) comprise a recess (60) formed in the guide rib (56), wherein a guide cam (71) of the locking lever (70) projects into that recess (60) at the time the drawer (12) is in its insert end position, wherein preferably said rib (56) forms the control curve (77).

14. The SIM card reader, as set forth in one or more of the preceding claims, wherein the locking lever (70) is pivotally mounted about a pivot point (73) in a recess (76) formed in the contact support (13), and, for this purpose, the locking lever comprises at its end opposite to the cam a disc shaped partially circular bearing element (74) which is pivotally mounted in a bearing recess (74).

15. The SIM card reader, according to one or more of the preceding claims, wherein the pull-in means are designed such, that they provide only or substantially only a locking or mounting of the drawer in a position corresponding to the reading position of the SIM card.

## Revendications

1. Lecteur de carte SIM ou de carte à puce (10) comportant un boîtier (11) dans lequel un tiroir (12) dans lequel une carte SIM est insérée peut être poussé dans une direction d'insertion dans une position de lecture de la carte SIM ;
**caractérisé en ce que**
des moyens de tirage (16) sont prévus pour, après qu'une certaine distance a été parcourue dans la direction d'insertion, déplacer le tiroir (12) indépendamment dans le lecteur de carte SIM (10) et le verrouiller.

2. Lecteur de carte SIM (10) selon la revendication 1, dans lequel les moyens de tirage (16) comprennent un système de levier qui coopère avec le tiroir de sorte que la force nécessaire pour le mouvement d'insertion est plus faible que la force nécessaire pour le retrait du tiroir (12), et dans lequel
dans ledit boîtier (11), au moins un levier de verrouillage (70) est monté de façon pivotante latéralement par rapport à la direction du mouvement du tiroir (12), dans lequel
le levier de verrouillage (12) coopère avec le tiroir (12) de sorte que pendant le mouvement d'insertion initial du tiroir (12) dans le support de contacts (13) des moyens de ressort (80, 81) sont sollicités, et les moyens de ressort vont, lorsque le tiroir atteint une position d'insertion proche de la position de lecture de la carte SIM, agir au moyen du levier de verrouillage (70) sur le tiroir (12) de sorte que le tiroir est déplacé rapidement avec force dans la position de lecture finale.

3. Lecteur de carte SIM (10) selon la revendication 2, dans lequel ledit au moins un levier de verrouillage (70) comprend une surface de came (72) qui est sollicitée par les moyens de ressort (80, 82) contre une nervure de guidage (56) du tiroir (12), ladite nervure de guidage (56) formant des sections courbes de contrôle a, b, c, qui, conjointement avec la surface de came (72), effectuent initialement une mise en tension des moyens de ressort et ensuite lancent un mouvement de poussée soudain du tiroir.

4. Lecteur de carte SIM selon la revendication 1 ou 2, dans lequel les moyens de tirage (16) comprennent un levier de verrouillage (70) qui est monté dans le support de contacts (13) ou le tiroir (12), le levier de verrouillage (70) étant adapté à coopérer avec une courbe de contrôle qui est formée dans le support de contacts ou dans le tiroir, les moyens de ressort (80, 81) pressant le levier de verrouillage (70) contre une courbe de contrôle (77), et le levier de verrouillage (70) étant de préférence monté de façon pivotante dans un renfoncement (76) d'une paroi latérale (37).

5. Lecteur de carte SIM (10) selon une ou plusieurs des revendications précédentes, comprenant un châssis métallique (14) formant une partie supérieure en forme de fer à cheval (35) qui couvre les parois latérales 201, 202 par le dessus et qui enferme latéralement et partiellement les parois latérales, et dans lequel le châssis métallique forme, de préférence conjointement avec les première et deuxième parois latérales (36, 37), une lame de ressort (80) qui est en contact avec le levier de verrouillage.

6. Lecteur de carte SIM (10) selon une ou plusieurs des revendications précédentes, dans lequel le tiroir (12) comprend une plaque de réception (50) qui est munie le long de ses surfaces latérales (47, 48) de moyens de guidage (52, 53), et dans lequel de préférence la surface arrière de la plaque de réception (50) comprend une surface de butée (55) pour une butée au niveau d'une surface de butée (25) formée par le support de contacts.

7. Lecteur de carte SIM ou de carte à puce selon la revendication 1, dans lequel les moyens de verrouillage de tirage qui, peu avant d'atteindre la position de lecture, tirent indépendamment le tiroir (moyens d'insertion de carte) dans le support de contacts et dans la position de lecture de la carte à puce,
fournissent une force de rétention dans la position de lecture, de sorte que lors du retrait du tiroir (moyens d'insertion de carte), pour vaincre la force de rétention, il faut une force de tirage (retrait) plus grande que la force appliquée par l'utilisateur pour l'insertion.

8. Lecteur de carte SIM selon une ou plusieurs des revendications précédentes, dans lequel au niveau de la surface de came (72) différentes sections ayant différentes courbures sont prévues, et dans lequel de préférence le tiroir (12), dans sa position de fin d'insertion, bute sur une surface de butée (25) de la paroi arrière (203), la carte SIM, transportée par le tiroir (12), étant dans sa position de lecture.

9. Lecteur de carte SIM, selon une ou plusieurs des revendications précédentes, dans lequel il est prévu dans une découpe (30) de la paroi du fond (20) un contact de commutateur de fin de course mobile (17) d'un commutateur de fin de course (9), qui coopère avec un contact de commutateur de fin de course (18) qui est aussi situé dans le support de contacts (13).

10. Lecteur de carte SIM selon une ou plusieurs des revendications précédentes, dans lequel le châssis métallique est monté par des onglets d'ancrage (39) au niveau d'oreilles d'ancrage (26-29) du support de contacts (13).

11. Lecteur de carte SIM selon une ou plusieurs des revendications précédentes, dans lequel le tiroir (12) forme au niveau de son côté inférieur un espace de réception (310) pour la carte SIM et dans lequel le tiroir est de préférence en métal.

12. Lecteur de carte SIM selon une ou plusieurs des revendications précédentes, dans lequel les moyens de guidage (52) comprennent une nervure de guidage (56) qui forme une surface latérale (57) et une surface de guidage supérieure (58), dans lequel en outre, au dessus de la nervure de guidage (56), est formée une surface de guidage latérale (59), et dans lequel de préférence la nervure de guidage (56) ne s'étend pas dans la zone de la surface arrière ou de la paroi arrière du tiroir (12).

13. Lecteur de carte SIM selon une ou plusieurs des revendications précédentes, dans lequel les moyens de tirage (15, 16) comprennent un renfoncement (60) formé dans la nervure de guidage (56), dans lequel une came de guidage (71) du levier de verrouillage (70) est saillante dans ce renfoncement (60) au moment où le tiroir (12) est dans sa position d'extrémité d'insertion, ladite nervure (56) formant de préférence la courbe de contrôle (77).

14. Lecteur de carte SIM selon une ou plusieurs des revendications précédentes, dans lequel le levier de verrouillage (70) est monté de façon pivotante autour d'un point pivot (73) dans un renfoncement (76) formé dans le support de contacts (13), et, dans ce but, le levier de verrouillage comprend au niveau de son extrémité opposée à la came un élément de palier partiellement circulaire en forme de disque (74) qui est monté de façon pivotante dans un renfoncement de palier (74).

15. Lecteur de carte SIM selon une ou plusieurs des revendications précédentes, dans lequel les moyens de tirage sont conçus de telle sorte qu'ils assurent seulement ou sensiblement seulement un verrouillage ou un montage du tiroir dans une position correspondant à la position de lecture de la carte SIM.
